# EUROPEAN PATENT APPLICATION

(11) **EP 3 211 914 A1**
(43) Date of publication of application: **30.08.2017**
(21) Application number: 17154617.9
(22) Date of filing: 03.02.2017
(51) Int. Cl.: H04Q 9/00

(54) **A MONITORING SYSTEM OF INDIVIDUAL PROTECTION DEVICES**

(30) Priority: 25.02.2016 IT UB20161070
(71) Applicant: B810 Societa' A Responsabilita' Limitata, 42122 Reggio Emilia (RE) (IT)
(72) Inventor: PAPARCONE, Massimiliano, I-42122 Reggio Emilia (IT)
(74) Representative: Corradini, Corrado

(57) **Abstract**

A system (100) is described for monitoring individual protection devices, comprising: a plurality of individual protection devices (105-125), each of which is provided with a mark (130) able to emit a respective identifying code in radio-frequency, and a remote electronic control unit (140) configured for detecting the marks (130) by means of tracking respective identifying codes via a radio infrastructure (145).

## Description

### TECHNICAL FIELD

The present invention relates to a system and a method for monitoring individual protection devices. i.e. protection devices which, for reasons of safety, must be worn/used by a person during the carrying out of some activities.

### PRIOR ART

As is known, there are some human activities that are carried out in perilous environments or in conditions that involve risks for the safety of the persons carrying them out.

For example, in order to carry out maintenance of electrical plant, the operatives can be required to work at high altitudes and/or in environments in which high-tension components are present.

With the aim of improving the safety of these operatives, it is therefore usual for them to wear and/or use individual protection devices, such as for example a harness, a helmet, gloves or others besides.

The control of the correct use of these devices is traditionally devolved to the operatives themselves, who however are not always updated on the list of protection devices to be used for each activity or, in other circumstances, who prefer to do without the use of some protection devices that are particularly uncomfortable or annoying.

### SUMMARY OF THE INVENTION

An aim of the present invention is to disclose a monitoring system for automatic detection of the individual protection devices which can obviate the above-mentioned drawbacks.

A further aim is to attain the above-mentioned objective with a system that is simple, rational and as inexpensive as possible.

These and other aims are attained by the characteristics reported in the independent claims. The dependent claims delineate preferred and/or particularly advantageous aspects of the invention.

In particular, an embodiment of the present invention relates to a monitoring system of individual protection devices, comprising:
- a plurality of individual protection devices, each of which is provided with a mark able to emit a respective identifying code in radio-frequency, and
- a remote electronic control unit configured for detecting the marks by means of tracking respective identifying codes via a radio infrastructure.

With this solution, the system is advantageously able to have real-time knowledge of all the devices that are used by one or more operatives during the carrying out of their work.

The data thus obtained can then be displayed on a screen and/or can be memorised in a memorisation unit associated to the electronic unit, thus enabling a supervisor to compare the protection devices really in use with those necessary for the various activities, with the aim of informing the operative and/or taking the necessary counter-measures.

In an aspect of the invention, the remote electronic control unit can be further configured for comparing marks detected with a predetermined list of marks. In this way, the remote electronic control unit can be automatically able to discern whether the operatives are using all the protection devices necessary for carrying out their activities.

In this context, in a further aspect of the invention the remote electronic control unit can be further configured for generating a non-conformity signal if the comparison reveals that there exists a difference between the marks detected and the marks on the list.

With this solution, the remote electronic control unit can be able to inform the supervisor, automatically and directly, that one or more operatives have carried out an activity without being correctly equipped.

In this regard, the non-conformity signal might be represented by a datum/item of information that is memorised in a memory unit associated to the remote electronic control unit, so that the supervisor can be aware of what has happened by consulting the memory unit. Alternatively or additionally, the signal of non-conformity might take the form of an alarm signal, for example an acoustic or visual signal, which can immediately inform the supervisor, enabling him or her to intervene in good time.

In a further aspect of the invention, each individual protection device can also comprise a motion sensor (for example an accelerometer) associated to the mark.

With this solution, the system is advantageously able to coordinate the functioning of the mark with the detections carried out by the motion sensor, and render greater information on the effective use of the protection devices. In particular, in an aspect of the invention each mark can be configured for emitting an identifying code thereof when (or at least as long as) the respective motion sensor detects that the protection device is moving.

In this way, the remote electronic control unit will detect the presence of the protection device each time the device moves, i.e. when the device is probably effectively worn or in any case used by the operative.

In a further aspect of the invention, each mark can be configured for interrupting emission of the identifying code when the motion sensor detects that the protection device is immobile.

In this way, the remote electronic control unit will stop detecting the presence of the protection device each time the device is stationary, or when the device is probably not being used.

In a further aspect of the invention, each mark can be configured for counting a time that passes starting from an instant in which the motion sensor detects that the protection device passes from a state of movement to a state of immobility, and for interrupting emission of the identifying code when the time counted exceeds a predetermined threshold value.

With this solution, the protection device will not become invisible to the remote electronic control unit immediately each time it is immobile, but only if it remains immobile for a certain time, preventing false signalling of nonconformities due for example to the fact that the operator remains stationary for a few seconds.

In this context, in a further aspect of the invention, each mark can be configured for priorly transmitting to the remote electronic control unit a signal indicating immobility of the corresponding protection device, after the motion sensor detects that the protection device has passed from a state of motion to a state of immobility but before interrupting the emission of the identifying code.

Owing to this further datum, the remote electronic control unit is able to know whether the missing detection of a protection device is due effectively to a state of immobility, or if it can be due to another cause, for example a fault or a malfunctioning of the system, since in this case the non-identification will not be preceded by any signal of immobility.

In a different aspect of the invention, the radio infrastructure is based on an ultra-narrow-band or ultra-wide-band transmission method, for example at 868 Mhz (for Europe) or 902 MHz (for the USA). In particular, the radio infrastructure can be the wireless communications network of the French company Sigfox or a like network.

These radio infrastructures enable a long and very long-distance communication between the marks installed in the protection devices and the remote electronic control unit, which can therefore be located even at a great distance from the areas in which the activities take place, without for this reason requiring the use of intermediate devices, such as for example smartphones or other telephone systems, which function as repeaters or intermediaries among the marks and the remote electronic control unit.

Lastly, an embodiment of the present invention also discloses a method for monitoring individual protection devices, comprising steps of:
- equipping each of a plurality of individual protection devices with a mark able to emit a respective identifying code in radio-frequency,
- detecting the marks by means of tracking respective identifying codes via a radio infrastructure.

This embodiment substantially produces the same advantages as the system delineated in the foregoing, in particular the advantage of enabling remote control even at great distances of the individual protection devices which are used in carrying out some human activities.

Naturally all these subordinate aspects that have been mentioned in relation to the monitoring system are also applicable to the method.

In particular, the method can also include one or more of the following steps:
- comparing the marks detected with a predetermined list of marks;
- generating a non-conformity signal if the comparison reveals that there exists a difference between the marks detected and the marks on the list;
- equipping each individual protection device also with a motion sensor (for example an accelerometer) associated to the mark;
- configuring each mark for emitting an identifying code thereof when (or at least as long as) the respective motion sensor detects that the protection device is moving;
- configuring each mark for interrupting emission of the identifying code when the motion sensor detects that the protection device is immobile;
- configuring each mark for counting a time that passes starting from an instant in which the motion sensor detects that the protection device passes from a station of movement to a state of immobility, and for interrupting emission of the identifying code when the time counted exceeds a predetermined threshold value;
- configuring each mark for priorly transmitting to the remote electronic control unit a signal indicating immobility of the corresponding protection device, after the motion sensor detects that the protection device has passed from a state of motion to a state of immobility but before interrupting the emission of the identifying code.

### BRIEF DESCRIPTION OF THE DRAWINGS

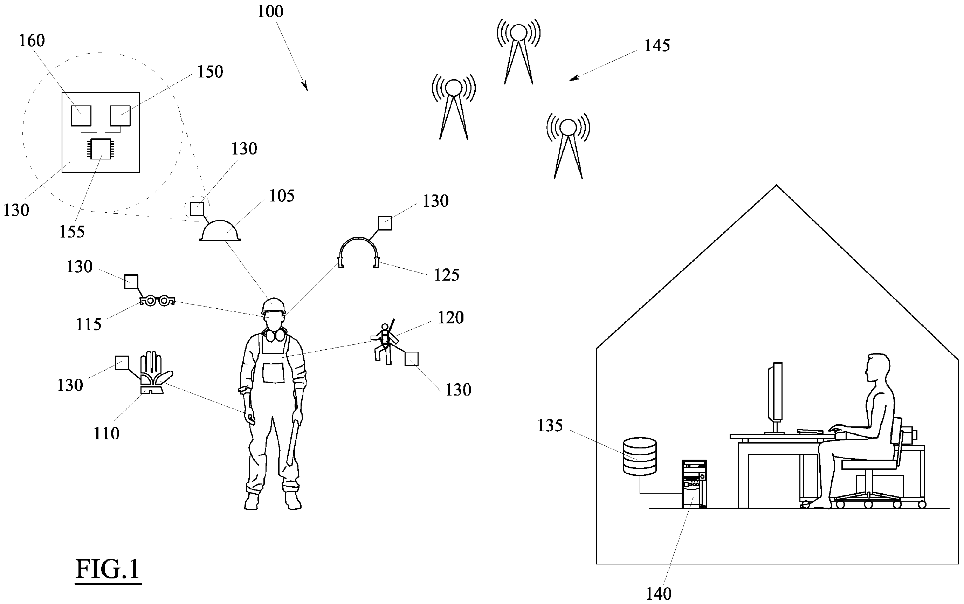

Further characteristics and advantages of the invention will emerge from a reading of the following description, provided by way of non-limiting example with the aid of the figures illustrated in the appended tables of drawings. Figure 1 is a schematic diagram of the monitoring system of individual protection devices according to an embodiment of the present invention.

### DETAILED DESCRIPTION

In the above-mentioned figure a system 100 is illustrated for monitoring individual protection devices, i.e. protection devices which, for reasons of safety, must be worn/used by a person during performance of an activity.

For example, the system 100 can be used in a work environment for monitoring whether an operative or a team of operatives entrusted with carrying out a predetermined activity, typically in conditions and/or environments that are potentially perilous for their well-being, are correctly wearing/using the individual protection devices which are indicated for the carrying-out of that specific activity.

Situations of this type can emerge for example in the field of building or installation/maintenance of electrical plants, in which the companies operating in the sector employ teams of operatives/workers for carrying out activities externally of their bases and in situations of potential risk of injury, for example for repairing an electricity line on a trellis, replacing an electrical switchboard cabin, carrying out building activities in a worksite and many other situations of this type.

In carrying out each of the these activities, regulations and the rules of good practice require each operative to wear/use a certain number of individual protection devices, such as for example a helmet, gloves, goggles, harnesses, ear protectors, and so on.

Therefore, for each worker there is generally available a work programme that includes a list of activities he or she must carry out (alone or in a group) in a determined time period, for example during a working day, and for each of these activities a corresponding list of individual protection devices which he or she must wear/use, where the list of individual protection devices can, naturally, vary according to the specific activity to be carried out.

In this context, a monitoring system 100 includes making available, for each operator, a plurality of different individual protection devices, for example a helmet 105, gloves 110, goggles 115, harness 120 and ear protectors 125, each of which is equipped with a relative radio-frequency identifying mark 130 that is able to emit a radio signal containing an identifying code which is different from the identifying codes emitted by the marks 130 of all the other protection devices.

In particular, the identifying code of the mark 130 associated to each protection device can be different not only from the identifying codes of the marks 130 associated to other types of protection device, such as for example the helmet 105 and the goggles 115 have different identifying codes, but also from the identifying codes of the marks associated to protection devices of the same type, so that, for example, two helmets 105 belonging to two different operatives have two different identifying codes.

In this way, each mark 130 is able to identify both the specific protection device to which it is applied (for example a helmet) and also the operative to whom that protection device is assigned.

The correlation between the identifying code emitted by each mark 130, the relative protection device and possibly the operative to whom the protection device is assigned, can be recorded in an appropriate database memorised in a memorisation unit 135 of a remote electronic control unit 140.

The remote electronic control unit 140 can be inside an operating central station located even at a great or very great distance with respect to the position where the protection devices are located.

The marks 130 can send the respective radio signals by means of an ultra-narrow-band or ultra-wide-band transmission method, for example at 868 Mhz (for Europe) or 902 MHz (for the USA).

With an appropriate radio infrastructure145, the radio signal emitted by each mark 130 is then sent to the remote electronic control unit 140.

The radio infrastructure 145 can be for example a wireless communications network comprising a multitude of base stations distributed over a wide territory, for example at regional, national or international level, and which are able to receive the radio signal emitted by the marks 130 and re-transmit it internally of the network up to reaching the remote electronic control unit 140. In particular, the radio infrastructure 145 can be the wireless communications network of the French company Sigfox or a like network.

The remote electronic control unit 140 can be an electronic processing device based on processors or microprocessors, which can be connected to a radio receiver able to track, via the radio infrastructure 145, the radio signal emitted by the marks 130.

The radio receiver must therefore be able to implement the same transmission method as used by the marks 130, for example the above-mentioned ultra-narrow-band or ultra-wide-band transmission method, for example at 868 Mhz (for Europe) or 902 MHz (for the USA).

The remote electronic control unit 140 can further be provided with interfacing means, among which for example a display monitor, and can possibly be connected with the electronic memorisation unit 135 for exchange of data.

In greater detail, each mark 130 comprises a radio emitter 150 able to emit the radio signal containing the relative identifying code, and can further be provided with its own local electronic control unit 155, for example based on a microprocessor, which is able to control the radio emitter 150.

The local electronic control unit 155 can also be connected to a motion sensor 160, for example an accelerometer and preferably a three-axis accelerometer, which is applied to the same protection device to which the mark 130 is applied.

For example, the motion sensor 160 can be integrated or in any case can be a part of the mark 130.

By using the signal received from the motion sensor 160, the local electronic control unit 155 can be configured for recognising when the respective protection device moves, which indicates that the protection device is probably being worn/used by the operator while carrying out his or her work, and when the protection device is immobile, which indicates that the protection device is probably not being worn.

On the basis of this information, the local electronic control unit 155 can be further configured for commanding the radio emitter 150 to emit the relative radio signal when (and as long as) the protection device is moving, and for commanding the radio emitter 150 to interrupt emission of the relative radio signal when (and as long as) the protection device is stationary.

In this way, each protection device will be captured by the remote electronic control unit 140 (i.e. the signal of the relative mark 130 will be tracked) only when the protection device moves (i.e. only when it can be presumed that it is effectively being used).

By applying the identifying codes tracked via radio to the memorised correlation database in the electronic memorisation unit 135, the remote electronic control unit 140 can thus identify, in real time, and possibly record all the individual protection devices which each operator is effectively wearing/using.

To increase the reliability of the system, it is however preferable for the local electronic control unit 155 of each mark 130 to be configured so as to identify the instant in which the respective protection device passes from a state of motion to a state of immobility. Starting from this instant, the local electronic control unit 155 can set off a timer which counts the time that passes up to reaching a predetermined threshold value, for example 40 seconds. During this period of time, the emitter 150 can be commanded to continue emitting the radio signal, keeping the protection device "trackable". The local electronic control unit 155 can then effectively interrupt the emission of the radio signal only when the time counted by the timer reaches the threshold value without the protection device in the meantime having recommenced motion.

In this way, a protection device is prevented from being momentarily "non-trackable" with respect to the remote electronic control unit 140, simply because the operator wearing/using it has stayed perfectly still for a few moments.

In order to further increase the reliability of the system, each local electronic control unit 155 can be further configured for priorly commanding the emitter 150 to send, to the remote electronic control unit 140, an appropriate signalling code which indicates the state of immobility of the respective protection device, as soon as the protection device passes from the station of motion to the state of immobility or at any moment comprised between that instant and the instant in which the transmission of the radio signal is stopped.

On the basis of receiving or not this "immobility signal", the remote electronic control unit 140 can be configured for discerning whether the non-tracking of a mark 130 is effectively due to a state of immobility (and therefore of non-use) of the respective protection device, or whether it is due to another cause, for example a fault or malfunction, as only in the first case is the missing tracking preceded by the receiving of the immobility signal.

With this architecture of the monitoring system 100, the remote electronic control unit 140 can be configured so as to provide a supervisor using the monitoring system 100 with various data.

For example, the remote electronic control unit 140 can be simply configured for real-time signalling, for example by displaying on a monitor, the individual protection devices which each operator is wearing/using.

In this way, the supervisor will be able to compare this data with the work programme of each operator and in particular compare the list of the protection devices necessary for carrying out the activity programmed at that moment with those that the operator is effectively wearing/using, so as to be able to take the necessary counter-measures if necessary.

Alternatively, each operator could be requested to provide the supervisor with an indication of the activity he or she is carrying out, for example by ending a corresponding message (for example an SMS text message) before the start of each activity, so that the supervisor does not have to consult the work programme but simply to compare the list of protection devices required for that specific activity with those effectively being used.

In other embodiments, these operations might be carried out automatically by the remote electronic control unit 140.

For example, the work programme of each operative and/or the list of protection devices that he has to wear/use in carrying out each activity might be memorised in a database contained in the memorisation unit 135.

The remote electronic control unit 140 might therefore be configured for retrieving from this database, on the basis of the work programme by means of a direct start-activity signal (as explained in the foregoing), the list of protection devices that each operative would have to wear/use at that time and compare it with the protection devices that are referable to that operative and which are effectively detected by the system at the same moment.

If this comparison reveals that there is a difference between the two groups of protections, the remote electronic control unit 140 can be configured for generating a non-conformity signal, which might result in a datum/item of information which is simply memorised in the electronic memorisation unit 135, so that the supervisor can take note of this event by consulting the electronic memorisation unit 135, or it can result in (or also comprise) an alarm signal, for example an acoustic or visual signal, which can immediately inform the supervisor of the situation, enabling him or her to make a timely intervention.

Obviously a technical expert in the sector might make numerous modifications of a technical-applicational nature to the monitoring system 100, without its forsaking the scope of the invention as claimed in the following.

## Claims

1. A monitoring system (100) of individual protection devices, comprising:
- a plurality of individual protection devices (105-125), each of which is provided with a mark (130) able to emit a respective identifying code in radio-frequency, and
- a remote electronic control unit (140) configured for detecting the marks (130) by means of tracking respective identifying codes via a radio infrastructure (145).

2. The system (100) of claim 1, wherein the remote electronic control unit (140) is further configured for comparing marks (130) detected with a predetermined list of marks.

3. The system (100) of claim 1 or 2, wherein the remote electronic control unit (140) is further configured for generating a non-conformity signal if the comparison reveals that there exists a difference between the marks (130) detected and the marks on the list.

4. The system (100) of according to any one of the preceding claims, where each individual protection device (105-125) also comprises a motion sensor (160) associated to the mark (130).

5. The system (100) of claim 4, wherein each mark (130) is configured for emitting an identifying code thereof when the respective motion sensor (160) detects that the protection device is moving.

6. The system (100) of claim 3 or 4, wherein each mark (130) is configured for interrupting emission of the identifying code when the motion sensor (160) detects that the protection device is immobile.

7. The system (100) of any one of claims from 3 to 6, wherein each mark (130) is configured for counting a time that passes starting from an instant in which the motion sensor (160) detects that the protection device passes from a station of movement to a state of immobility, and in order to interrupt emission of the identifying code when the time counted exceeds a predetermined threshold value.

8. The system (100) of claim 7, wherein each mark (130) is configured for priorly transmitting to the remote electronic control unit (140) a signal indicating immobility of the corresponding protection device, after the motion sensor (160) detects that the protection device has passed from a state of motion to a state of immobility but before interrupting the emission of the identifying code.

9. The system (100) of any one of the preceding claims, wherein the radio infrastructure (145) is based on an ultra-narrow-band or ultra-wide-band transmission method.
